# EUROPEAN PATENT SPECIFICATION

(11) **EP 1 382 202 B1**
(45) Date of publication and mention of the grant of the patent: **26.07.2006**
(21) Application number: 02720374.4
(22) Date of filing: 09.04.2002
(51) Int. Cl.: H04N 7/167, H04K 1/02

(54) **AUDIO CODING WITH PARTIAL ENCRYPTION**
AUDIOKODIERUNG MIT PARTIELLER ENKRYPTION
CODAGE AUDIO A CHIFFREMENT PARTIEL

(30) Priority: 18.04.2001 EP 01201405
(43) Date of publication of application: 21.01.2004
(73) Proprietor: Koninklijke Philips Electronics N.V., 5621 BA Eindhoven (NL)
(72) Inventor: OOMEN, Arnoldus, W., J., NL-5656 AA Eindhoven (NL); VAN DE KERKHOF, Leon, M., NL-5656 AA Eindhoven (NL)
(74) Representative: Groenendaal, Antonius W. M.
(86) International application number: PCT/IB2002/001281
(87) International publication number: WO 2002/087241

(56) References cited:
- EP-A- 1 073 222
- WO-A-99/55089
- DE-C- 19 907 964
- US-A- 6 081 784
- HERRE J ET AL: "Compatible scrambling of compressed audio" APPLICATIONS OF SIGNAL PROCESSING TO AUDIO AND ACOUSTICS, 1999 IEEE WORKSHOP ON NEW PALTZ, NY, USA 17-20 OCT. 1999, PISCATAWAY, NJ, USA,IEEE, US, 17 October 1999 (1999-10-17), pages 27-30, XP010365060 ISBN: 0-7803-5612-8
- "RADIO/CORDLESS TELEPHONE PRIVACY-ASCERTAINING DEVICE" IBM TECHNICAL DISCLOSURE BULLETIN, IBM CORP. NEW YORK, US, vol. 33, no. 10B, 1 March 1991 (1991-03-01), pages 88-91, XP000110131 ISSN: 0018-8689

## Description

The present invention relates to coding and decoding audio signals. In particular, the invention relates to low bit-rate audio coding as used in solid-state audio or Internet audio.

Compatible scrambling is a technique to scramble (parts of) a bit-stream in such a way that the scrambled bit-stream is still decode-able, but the decoded signal results in a degraded signal. Thus, compatible scrambling can be applied to control the quality after decoding a compressed audio bit-stream in a copy-controlled environment. This technique has been disclosed for an AAC transform coder (Advanced Audio Coding a part of the MPEG-2 standard) in "Secure Delivery of Compressed Audio by Compressed Bit-Stream Scrambling", E. Allamanche and J. Herre, AES 108th Convention, Paris, 2000 February 19-22, or in US-A-6 081 784 by Tsutsui Kyoya.

Here, the AAC bit-stream is encrypted with a key such, that for no increase in bit-rate, the quality can be set to any required level (below the quality obtained for the unscrambled stream). If the encryption key is known (by means of some transaction), the bit-stream can be decrypted to its original state. Allamanche also states that this method of compatible scrambling is also applicable to other compression schemes.

However, for an AAC transform coder, or any other waveform coder, the spectrum is typically encoded using a coarse and a fine spectral representation. A set of scale-factors is used to describe a coarse representation of the spectrum and a fine division in between subsequent scale-factors is used to describe the fine structure of the spectrum. The compatible scrambling in Allamanche is done by modifying (scrambling) the fine structure of the spectrum to an extent that a certain lower quality level signal is obtained.

For a parametric coding scheme, for example, the sinusoidal coder type described in published PCT patent application No WO-A-0 079 519 (Attorney Ref: N 017502), the signal components are not described in terms of a coarse and a fine spectral representation. Rather, sinusoidal parameters describe so-called tracks, which are sinusoids that start at a specific time instance, evolve for a certain amount of time and then stop. In the period that the sinusoid is active, the evolution is typically slowly varying. Therefore, the compatible scrambling techniques as proposed in Allamanche are not applicable to a sinusoidal coding scheme.

United States Patent US 6 081 784 discloses an encoding method for encrypting and encoding information signals, such as PCM audio signals, in which the information can be reproduced with low quality even in the absence of the key information for encryption. The PCM signals are converted by a transform unit into frequency signal components which are encoded by a signal component encoding unit

According to the present invention there are provided a method of encoding an audio signal, as set out in claim 1, a method of decoding an audio signal as set out in claim 15, an audio coder as set out in claim 16, an audio player as set out in claim 17, and an audio stream as set out in claim 19.

In a preferred embodiment of the invention, the parametric representation includes codes representing sustained sinusoidal components of the audio signal, for which frequency and/or amplitude parameters are updated differentially during the period that a sinusoid is active. To scramble the differential encoded frequency and/or amplitude values, the differential values are mapped onto other differential values. By modifying these values, the bit-stream is still decode-able but results in tracks with random frequency and/ or amplitude variation. Consequently, the signal will be degraded.

Various embodiments of the invention will now be described with reference to the accompanying drawings, in which:
Fig. 1 shows an embodiment of an audio coder according to the invention;
Fig. 2 shows an embodiment of an audio player according to the invention; and
Fig. 3 shows a system comprising an audio coder and an audio player.

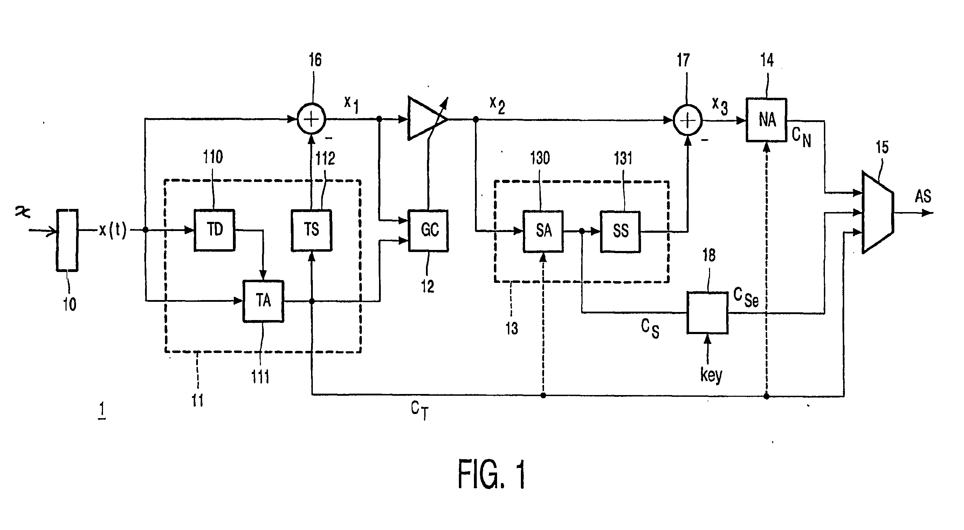

In a preferred embodiment of the present invention, the application of compatible scrambling for a parametric coding scheme is described, Figure 1, where the encoder is a sinusoidal coder. In both the related cases and the preferred embodiment, the audio coder 1 samples an input audio signal at a certain sampling frequency resulting in a digital representation x(t) of the audio signal. This renders the time-scale t dependent on the sampling rate. The coder 1 then separates the sampled input signal into three components: transient signal components, sustained deterministic (sinusoidal) components, and sustained stochastic (noise) components. The audio coder 1 comprises a transient coder 11, a sinusoidal coder 13 and a noise coder 14. The audio coder optionally comprises a gain compression mechanism (GC) 12.

In this embodiment of the invention, transient coding is performed before sustained coding. This is advantageous because transient signal components are not efficiently and optimally coded in sustained coders. If sustained coders are used to code transient signal components, a lot of coding effort is necessary; for example, one can imagine that it is difficult to code a transient signal component with only sustained sinusoids. Therefore, the removal of transient signal components from the audio signal to be coded before sustained coding is advantageous. It will also be seen that a transient start position derived in the transient coder may be used in the sustained coders for adaptive segmentation (adaptive framing).

Nonetheless, the invention is not limited to the particular use of transient coding.

The transient coder 11 comprises a transient detector (TD) 110, a transient analyzer (TA) 111 and a transient synthesizer (TS) 112. First, the signal x(t) enters the transient detector 110. This detector 110 estimates if there is a transient signal component and its position. This information is fed to the transient analyzer 111. This information may also be used in the sinusoidal coder 13 and the noise coder 14 to obtain advantageous signal-induced segmentation. If the position of a transient signal component is determined, the transient analyzer 111 tries to extract (the main part of) the transient signal component. It matches a shape function to a signal segment preferably starting at an estimated start position, and determines content underneath the shape function, by employing for example a (small) number of sinusoidal components.

In any case, it will be seen that where, for example, the transient analyser employs a Meixner like shape function, then the transient code CT will comprise the start position at which the transient begins; a parameter that is substantially indicative of the initial attack rate; and a parameter that is substantially indicative of the decay rate; as well as frequency, amplitude and phase data for the sinusoidal components of the transient.

If the bitstream produced by the coder 1 is to be synthesized by a decoder independently of the sampling frequency used to generate the bitstream, then the start position should be transmitted as a time value rather than, for example, a sample number within a frame; and the sinusoid frequencies should be transmitted as absolute values or using identifiers indicative of absolute values rather than values only derivable from or proportional to the transformation sampling frequency. Nonetheless, as will be seen later, the present invention can be implemented with any of the above schemes.

It will also be seen that the shape function may also include a step indication in case the transient signal component is a step-like change in amplitude envelope. In this - case, the transient position only affects the segmentation during synthesis for the sinusoidal and noise module. Again, although the invention is not limited to either implementation, the location of the step-like change may be encoded as a time value rather than a sample number, which would be related to the sampling frequency.

The transient code CT is furnished to the transient synthesizer 112. The synthesized transient signal component is subtracted from the input signal x(t) in subtractor 16, resulting in a signal x1. In case, the GC 12 is omitted, x1 = x2. The signal x2 is furnished to the sinusoidal coder 13 where it is analyzed in a sinusoidal analyzer (SA) 130, which determines the (deterministic) sinusoidal components. The resulting information is contained in the sinusoidal code CS and a more detailed example illustrating the generation of an exemplary sinusoidal code CS is provided in PCT patent application No. PCT/EP00/05344 (Attorney Ref: N 017502). Alternatively, a basic implementation is disclosed in "Speech analysis/synthesis based on sinusoidal representation", R. McAulay and T. Quartieri, IEEE Trans. Acoust., Speech, Signal Process., 43:744-754, 1986 or "Technical description of the MPEG-4 audio-coding proposal from the University of Hannover and Deutsche Bundespost Telekom AG (revised)", B. Edler, H. Purnhagen and C. Ferekidis, Technical note MPEG95/0414r, Int. Organisation for Standardisation ISO/IEC JTC1/SC29/WG11, 1996.

In brief, however, the sinusoidal coder of the preferred embodiment encodes the input signal x2 as tracks of sinusoidal components linked from one frame segment to the next. These tracks start at a specific time instance, evolve for a certain amount of time and then stop. Updates to these tracks from one segment to the next are described in terms of frequencies, amplitudes and optionally phase information. In the period that the sinusoid is active, the evolution is typically slowly varying. For that reason it is very bit-rate efficient to update the frequency and amplitude parameters differentially. Thus, the tracks are initially represented by a start frequency, a start amplitude and a start phase for a sinusoid beginning in a given segment - a birth. Thereafter, the track is represented in subsequent segments by frequency differences, amplitude differences and, possibly, phase differences (continuations) until the segment in which the track ends (death). In practice, it may be determined that there is little gain in coding phase differences. Thus, phase information need not be encoded for continuations at all and phase information may be regenerated using continuous phase reconstruction.

Again, if the bitstream is to be made sampling frequency independent, the start frequencies are encoded within the sinusoidal code CS as absolute values or identifiers indicative of absolute frequencies to ensure the encoded signal is independent of the sampling frequency.

From the sinusoidal code CS, the sinusoidal signal component is reconstructed by a sinusoidal synthesizer (SS) 131. This signal is subtracted in subtractor 17 from the input x2 to the sinusoidal coder 13, resulting in a remaining signal x3 devoid of (large) transient signal components and (main) deterministic sinusoidal components.

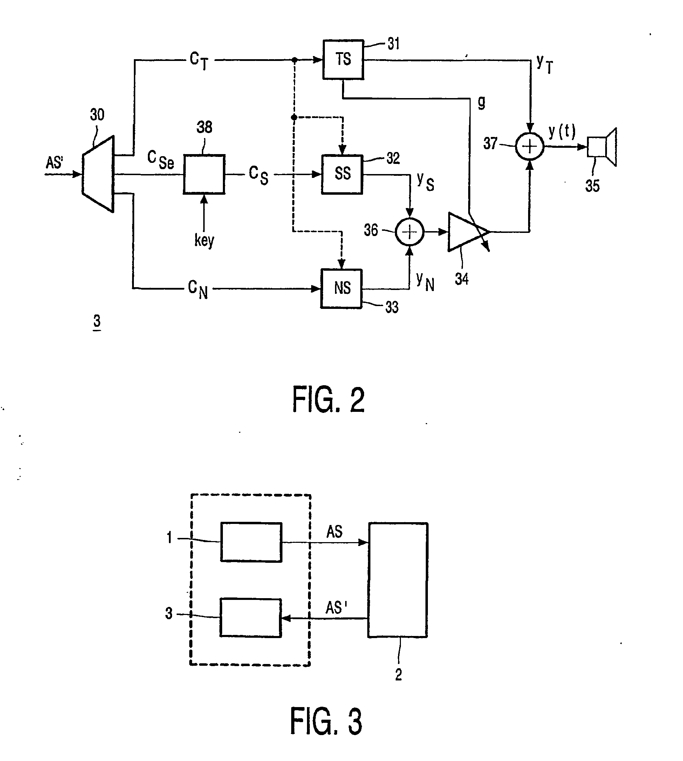

The remaining signal x3 is assumed to mainly comprise noise and the noise analyzer 14 of the preferred embodiment produces a noise code CN representative of this noise. Conventionally, as in, for example, PCT patent application No. PCT/EP00/04599, filed 17.05.2000 (Attorney Ref: PH NL000287) a spectrum of the noise is modelled by the noise coder with combined AR (auto-regressive) MA (moving average) filter parameters (pi,qi) according to an Equivalent Rectangular Bandwidth (ERB) scale. Within the decoder, Figure 2, the filter parameters are fed to a noise synthesizer NS 33, which is mainly a filter, having a frequency response approximating the spectrum of the noise. The NS 33 generates reconstructed noise yN by filtering a white noise signal with the ARMA filtering parameters (pi,qi) and subsequently adds this to the synthesized transient yT and sinusoid yS signals described later.

However, the ARMA filtering parameters (pi,qi) are again dependent on the sampling frequency of the noise analyser and, if the coded bitstream is to be independent of the sampling frequency, these parameters are transformed into line spectral frequencies (LSF) also known as Line Spectral Pairs (LSP) before being encoded. These LSF parameters can be represented on an absolute frequency grid or a grid related to the ERB scale or Bark scale. More information on LSP can be found at "Line Spectrum Pair (LSP) and speech data compression", F. K. Soong and B. H. Juang, ICASSP, pp. 1.10.1,1984. In any case, such transformation from one type of linear predictive filter type coefficients (in this case (pi,qi) dependent on the encoder sampling frequency) into LSFs which are sampling frequency independent and vice versa (as is required in the decoder) is well known and is not discussed further here. However, it will be seen that converting LSFs into filter coefficients (p'i,q'i) within the decoder can be done with reference to the frequency with which the noise synthesizer 33 generates white noise samples, so enabling the decoder to generate the noise signal yN independently of the manner in which it was originally sampled.

It will be seen that, similar to the situation in the sinusoidal coder 13, the noise analyzer 14 may also use the start position of the transient signal component as a position for starting a new analysis block. Thus, the segment sizes of the sinusoidal analyzer 130 and the noise analyzer 14 are not necessarily equal.

Nonetheless, as will be seen below, the present invention can be implemented with any noise encoding scheme including any of the schemes referred to above.

In the preferred embodiment of the present invention, scrambling is performed on the sinusoidal code CS produced by the sinusoidal analyser 130. In particular, in the preferred embodiment, an enciphering module 18 is disposed between the sinusoidal analyser 130 and a multiplexer 15. The enciphering module 18 scrambles the differential encoded frequency and/or amplitude values of the sinusoidal code CS for track continuation segments using a key provided. In other words, the module 18 maps the differential values onto other differential values to produce an encrypted sinusoidal code CSe. By modifying these values, the bit-stream comprising the codes CSe is still decode-able but results in tracks with randomised frequency variation and/or randomised amplitude variation over the life of a track. Consequently, without the correct key, the quality of synthesized signal produced by a decoder will be degraded.

The amount of degradation can be controlled by the amount and range over which these differentially encoded frequencies and/or amplitudes are modified. So, for example, it may be decided that certain types of audio signal are more sensitive to scrambling than others and similarly, that certain types of signal are more sensitive to frequency scrambling than amplitude scrambling. So, if a signal comprises a large sinusoidal component and as, in the case of classical music, tracks would be inclined to be long, i.e. they extend over a number of segments, and so they may be more sensitive to scrambling, than, for example, some forms of more modern popular music. Thus, the key and so the mapping used to perform the scrambling can be chosen accordingly.

Finally, in the multiplexer 15, an audio stream AS is constituted which includes the codes CT, CSe and CN. The audio stream AS is furnished to e.g. a data bus, an antenna system, a storage medium etc. It will be seen therefore that only the encrypted version of the signal is transmitted or stored.

Fig. 2 shows an audio player 3 according to the invention. An audio stream AS', generated either by an encoder according to Fig. 1 or a non-scrambling encoder, is obtained from the data bus, antenna system, storage medium etc. The audio stream AS is demultiplexed in a de-multiplexer 30 to obtain the codes CT, CSe and CN. The CT and CN codes are furnished to a transient synthesizer 31 and a noise synthesizer 33 respectively as in European patent application No. 00200939.7. From the transient code CT, the transient signal components are calculated in the transient synthesizer 31. In case the transient code indicates a shape function, the shape is calculated based on the received parameters. Further, the shape content is calculated based on the frequencies and amplitudes of the sinusoidal components. If the transient code CT indicates a step, then no transient is calculated. The total transient signal yT is a sum of all transients.

If adaptive framing is used, then from the transient positions, a segmentation for the sinusoidal synthesis SS 32 and the noise synthesis NS 33 is calculated. The noise code CN is used to generate a noise signal yN. To do this, the line spectral frequencies for the frame segment are first transformed into ARMA filtering parameters (p'i,q'i) dedicated for the frequency at which the white noise is generated by the noise synthesizer and these are combined with the white noise values to generate the noise component of the audio signal. In any case, subsequent frame segments are added by, e.g. an overlap-add method.

In accordance with the present invention, however, if a deciphering key is available, the CSe codes are assumed to have been scrambled and are first fed to a deciphering module 38. The deciphering module applies the key, acquired through conventional transaction techniques, to the encrypted CSe codes to produce unscrambled codes CS. It will be seen that once the correct key is provided to the decoder and so to deciphering module 38, the decoder need not otherwise be aware that the bitstream has been scrambled or the particular mapping chosen when encoding the signal.

If no key is available, for example, where the bitstream has not been scrambled or where the key simply has not been obtained, then the sinusoidal code CS, unaltered from the CSe codes provided, is used to generate signal yS, described as a sum of sinusoids on a given segment.

If the bitstream has not been scrambled, then it will be synthesized at its original sampled quality, as presumably no key will have been provided.

On the other hand, if the correct key is available for a scrambled signal, then sinusoidal codes CS corresponding to the original codes produced by the code analyser 130 are generated and these can be provided to the synthesizer 32 to generate signal yS.

The total signal y(t) comprises the sum of the transient signal yT and the product of any amplitude decompression (g) and the sum of the sinusoidal signal yS and the noise signal yN. The audio player comprises two adders 36 and 37 to sum respective signals. The total signal is furnished to an output unit 35, which is e.g. a speaker.

So, where no key is available or the wrong key is used, a degraded signal y(t) by comparison to the originally sampled signal x(t) will result. On the other hand, if the correct key is used, the sinusoidal component of the signal y(t) will be synthesized at the original sampled quality so producing the total signal at the original quality.

Fig. 3 shows an audio system according to the invention comprising an audio coder 1 as shown in Fig. 1 and an audio player 3 as shown in Fig. 2. Such a system offers playing and recording features, but prevents unauthorised copying of original quality material. The encrypted audio stream AS is furnished from the audio coder to the audio player over a communication channel 2, which may be a wireless connection, a data bus or a storage medium. In case the communication channel 2 is a storage medium, the storage medium may be fixed in the system or may also be a removable disc, solid state storage device such as a Memory Stick^{™} from Sony Corporation etc. The communication channel 2 may be part of the audio system, but will however often be outside the audio system.

It will be seen that variations of the preferred embodiment are also possible. For example, while on the one hand the noise component CN usually contributes a relatively small component of the overall signal and so its absence may not prove to be unacceptable to a listener, scrambling of the noise component to say randomly offset the spectral frequencies of the noise component of the signal may provide the required effect. Thus, an enciphering module (not shown) may be disposed between the noise analyser 14 and the multiplexer 15 in addition or alternatively to the module 18. Within the decoder, a corresponding deciphering module (not shown) is then additionally or alternatively disposed between the de-multiplexer 30 and the noise synthesizer 33 to de-scramble (if a key is provided) the noise codes from the bitstream.

Furthermore, while on the one hand transient components CT are typically only periodically encoded within the bitstream and so their absence may not prove to be unacceptable to a listener, again scrambling of the transients component to say randomly offset the amplitude and frequency parameters of the sinusoidal parameters which are weighted by the envelope function may provide the required effect. Thus, an enciphering module (not shown) may be disposed between the transient analyser 111 and the multiplexer 15 in addition or alternatively to the module 18 and/or any noise scrambling module. Within the decoder, a corresponding deciphering module (not shown) is then additionally or alternatively disposed between the de-multiplexer 30 and the transient synthesizer 31 to descramble (or not) the transient codes from the bitstream.

It should also be noted that in implementing the invention, scrambling of the codes CS, CT or CN may occur before or after any quantization of the code performed prior to multiplexing.

Also, as mentioned above, both the enciphering and deciphering modules may operate in any number of manners. So for example, the key need not simply be applied directly to the bitstream, rather it may in fact be used to encrypt and decrypt a mapping used to scramble and de-scramble the signal. Nonetheless, the composite mapping and key can be thought of as the key of the invention.

The present invention finds application where copyright management for compressed audio is desired, for example, SSA (Solid State Audio), EMD (Electronic Music Distribution), Super distribution and Internet.

It is observed that the present invention can be implemented in dedicated hardware, in software running on a DSP or on a general purpose computer. The present invention can be embodied in a tangible medium such as a CD-ROM or a DVD-ROM carrying a computer program for executing an encoding method according to the invention. The invention can also be embodied as a signal transmitted over a data network such as the Internet, or a signal transmitted by a broadcast service.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word 'comprising' does not exclude the presence of other elements or steps than those listed in a claim. The invention can be implemented by means of hardware comprising several distinct elements, and by means of a suitably programmed computer. In a device claim enumerating several means, several of these means can be embodied by one and the same item of hardware. The mere fact that certain measures are recited in mutually different dependent claims does not indicate that a combination of these measures cannot be used to advantage.

In summary, coding of an audio signal is provided where the coded bitstream comprises a parametric representation of the audio signal. One component of the parametric representation comprises tracks of linked sinusoidal components where subsequently linked components are coded differentially from parameters of linked signal components already determined. The coder scrambles the differentially encoded frequency and/or amplitude values by mapping the differential values onto other differential values. By modifying these values, the bit-stream is still decode-able but results in tracks with random frequency and/ or amplitude variation. Consequently, the signal will be degraded.

## Claims

1. A method of encoding (1) an audio signal (x), the method comprising the steps of:
- sampling the audio signal (x) to generate sampled signal values (x(t));
- analysing (13, 14) the sampled signal values to generate a parametric representation of the audio signal, the parametric representation comprising sinusoidal parameters (C_{S}) and noise parameters (C_{N});
- encrypting (18) at least some of the parameters of said parametric representation; and
- generating (15) an encoded audio stream (AS) including said encrypted parametric representation which is representative of said audio signal and enables said audio signal to be synthesized at a lower quality level than would be produced using an unencrypted parametric representation.

2. The method according to claim 1, further comprising the steps of:
- modelling (13) a sustained signal component of the audio signal by
a) determining tracks representative of linked signal components present in successive signal segments, and
b) extending tracks on the basis of parameters of linked signal components already determined,
wherein said encrypting step comprises scrambling the parameters of said linked signal components with a cryptographic key.

3. The method according to claim 2, wherein the parameters for a first signal component in a track include a parameter representative of an absolute frequency of said signal component and wherein said encrypting step comprises scrambling the parameters of subsequent signal segments with said cryptographic key.

4. The method according to claim 3, wherein said parameters of subsequent signal segments comprise differential amplitude and frequency values from parameters of linked signal components already determined and wherein said encrypting step comprises scrambling said amplitude and/or frequency differences.

5. The method according to any of the preceding claims, wherein said generating step provides a parametric representation independent of a first sampling frequency so allowing said audio signal to be synthesized independently of said first sampling frequency.

6. The method according to any of the preceding claims, further comprising the step of:
- modelling (14) a noise component of the audio signal by determining filter parameters (pi, qi) of a filter which has a frequency response approximating a target spectrum of the noise component.

7. The method according to claim 6, wherein said encrypting step comprises scrambling said filter parameters.

8. The method according to claim 6 or 7, comprising the step of converting the filter parameters to parameters independent of the first sampling frequency.

9. The method according to claim 8, wherein said filter parameters are autoregressive (pi) and moving average (qi) parameters and said independent parameters are indicative of Line Spectral Frequencies.

10. The method according to claim 8 or 9, wherein said encrypting step comprises scrambling said independent parameters.

11. The method according to claim 9 or 10, wherein said independent parameters are represented in one of absolute frequencies or a Bark scale or an ERB scale.

12. The method according to any of the preceding claims, further comprising the steps of:
- estimating (110) a position of a transient signal component in the audio signal; and
- matching (111,112) a shape function having shape parameters and a position parameter to said transient signal;
wherein said encrypting step comprises scrambling said position and/or shape parameters; and
wherein said generating step includes the encrypted position and shape parameters in said audio stream (AS).

13. The method according to claim 12, wherein said position parameter is representative of an absolute time location of said transient signal component in said audio signal (x).

14. The method according to claim 12 or 13, wherein said matching step is responsive to said transient signal component being a step-like change in amplitude to provide a shape function indicating a step transient.

15. A method of decoding an audio stream obtained by the encoding method of claim 1, comprising the steps of:
- reading an encoded audio stream (AS'), which audio stream is representative of an audio signal (x) and includes a parametric representation of the audio signal, the parametric representation comprising sinusoidal parameters (C_{Se}) and noise parameters (C_{N});
- responsive to the availability of a key, decrypting (38) at least some of the parameters of said parametric representation with said key; and
- employing (32, 33) said decrypted parametric representation (C_{S}, C_{N}) to synthesize said audio signal.

16. An audio coder (1), comprising:
- a sampler for sampling the audio signal (x) to generate sampled signal values (x(t));
- an analyser (13,14) for analysing the sampled signal values to generate a parametric representation of the audio signal, the parametric representation comprising sinusoidal parameters (C_{S}) and noise parameters (C_{N});
- an encryption module (18) for scrambling at least some of the parameters of said parametric representation; and
- a bit stream generator for generating (15) an encoded audio stream (AS) including said encrypted parametric representation which is representative of said audio signal and enables said audio signal to be synthesized from said encoded audio stream at a lower quality level than would be produced using an unencrypted parametric representation.

17. An audio player (3), comprising:
- means for reading an encoded audio stream (AS') received from the audio coder of claim 16, which audio stream is representative of an audio signal (x) and includes a parametric representation of the audio signal, the parametric representation comprising sinusoidal parameters (C_{Se}) and noise parameters (C_{N});
- means, responsive to the availability of a key, for decrypting (38) at least some of the parameters of said parametric representation with said key; and
- a synthesizer (32, 33) arranged to employ said decrypted parametric representation (C_{S}, C_{N}) to synthesize said audio signal.

18. An audio system comprising an audio coder (1) according to claim 16 and an audio player (2) according to claim 17.

19. An audio stream (AS) comprising partially encrypted parameters of a parametric representation of an audio signal, the parametric representation comprising sinusoidal parameters (C_{Se}) and noise parameters (C_{N}) and enabling said audio signal to be synthesized from said audio stream at a lower quality level than would be produced using an unencrypted parametric representation.

20. A storage medium on which an audio stream (AS) according to claim 19 has been stored.

## Patentansprüche

1. Verfahren zum Codieren (1) eines Audiosignals (x), wobei das Verfahren die folgenden Schritte umfasst:
- Abtasten des Audiosignals (x) zum Generieren von abgetasteten Signalwerten (x(t));
- Analysieren (13, 14) der abgetasteten Signalwerte zum Generieren einer parametrischen Darstellung des Audiosignals, wobei die parametrische Darstellung Sinusparameter (C_{*S*}) und Rauschparameter (C_{*N*}) umfasst;
- Enkryption (18) von mindestens einigen der Parameter von der parametrischen Darstellung; und
- Generieren (15) eines codierten Audiostroms (AS), der die verschlüsselte parametrische Darstellung, die das Audiosignal darstellt, umfasst, und das Synthetisieren des Audiosignals auf einem niedrigeren Qualitätsniveau als demjenigen, das unter Verwendung einer unverschlüsselten parametrischen Darstellung erzeugt würde, ermöglicht.

2. Verfahren nach Anspruch 1, das ferner die folgenden Schritte umfasst:
- Modellieren (13) einer andauernden Signalkomponente des Audiosignals durch
(a) Bestimmen von Spuren, die verbundene Signalkomponenten darstellen, die in aufeinander folgenden Signalsegmenten vorhanden sind, und
(b) Erweitern von Spuren basierend auf Parametern von bereits bestimmten verbundenen Signalkomponenten,
wobei der Enkryptionsschritt das Scrambling der Parameter von den verbundenen Signalkomponenten mit einem kryptographischen Schlüssel umfasst.

3. Verfahren nach Anspruch 2, wobei die Parameter für eine erste Signalkomponente in einer Spur einen Parameter umfassen, der eine Absolutfrequenz von der Signalkomponente darstellt und wobei der Enkryptionsschritt das Scrambling der Parameter von nachfolgenden Signalsegmenten mit dem kryptographischen Schlüssel umfasst.

4. Verfahren nach Anspruch 3, wobei die Parameter von nachfolgenden Signalsegmenten differentielle Amplituden- und Frequenzwerte von Parametern von bereits bestimmten verbundenen Signalkomponenten umfassen und wobei der Enkryptionsschritt das Scrambling der Amplituden- und/oder Frequenzdifferenzen umfasst.

5. Verfahren nach einem der vorhergehenden Ansprüche, wobei der Generierungsschritt unabhängig von einer ersten Abtastfrequenz eine parametrische Darstellung bereitstellt und so das Synthetisieren des Audiosignals unabhängig von der ersten Abtastfrequenz ermöglicht.

6. Verfahren nach einem der vorhergehenden Ansprüche, das ferner den folgenden Schritt umfasst:
- Modellieren (14) einer Rauschkomponente des Audiosignals durch Bestimmen von Filterparametern (pi, qi) von einem Filter, der einen Frequenzgang hat, der sich einem Zielspektrum der Rauschkomponente annähert.

7. Verfahren nach Anspruch 6, wobei der Enkryptionsschritt das Scrambling der Filterparameter umfasst.

8. Verfahren nach Anspruch 6 oder 7, das den Schritt des Konvertierens der Filterparameter in Parameter unabhängig von der ersten Abtastfrequenz umfasst.

9. Verfahren nach Anspruch 8, wobei die Filterparameter autoregressive (pi) und Moving-Average- (qi) Parameter sind und die unabhängigen Parameter Line Spectral Frequencies anzeigen.

10. Verfahren nach Anspruch 8 oder 9, wobei der Enkryptionsschritt das Scrambling der unabhängigen Parameter umfasst.

11. Verfahren nach Anspruch 9 oder 10, wobei die unabhängigen Parameter in einer von Absolutfrequenzen oder einer Bark-Skala oder einer ERB-Skala dargestellt werden.

12. Verfahren nach einem der vorhergehenden Ansprüche, das ferner die folgenden Schritte umfasst:
- Schätzen (110) einer Position einer transienten Signalkomponente im Audiosignal; und
- Anpassen (111, 112) einer Formfunktion, die Formparameter und einen Positionsparameter hat, an das transiente Signal;
wobei der Enkryptionsschritt das Scrambling der Positions- und/oder Formparameter umfasst; und
wobei der Generierungsschritt die verschlüsselten Positions- und Formparameter in dem Audiostrom (AS) umfasst.

13. Verfahren nach Anspruch 12, wobei der Positionsparameter eine absolute Zeitposition von der transienten Signalkomponente in dem Audiosignal (x) darstellt.

14. Verfahren nach Anspruch 12 oder 13, wobei der Anpassungsschritt auf die transiente Signalkomponente, die eine stufenartige Änderung der Amplitude ist, reagiert, um eine Formfunktion bereitzustellen, die einen Stufentransient anzeigt.

15. Verfahren zum Decodieren eines durch das Codierverfahren nach Anspruch 1 erhaltenen Audiostroms, das die folgenden Schritte umfasst:
- Lesen eines codierten Audiostroms (AS'), wobei der Audiostrom ein Audiosignal (x) darstellt und eine parametrische Darstellung des Audiosignals umfasst, wobei die parametrische Darstellung Sinusparameter (C_{*Sc*}) und Rauschparameter (C_{*N*}) umfasst;
- auf die Verfügbarkeit eines Schlüssels reagierend, Entschlüsseln (38) von mindestens einigen von den Parametern von der parametrischen Darstellung mit dem Schlüssel; und
- Verwenden (32, 33) der entschlüsselten parametrischen Darstellung (C_{*S*}, C_{*N*}) zum Synthetisieren des Audiosignals.

16. Audiocodierer (1), der Folgendes umfasst:
- einen Abtaster zum Abtasten des Audiosignals (x) zum Generieren von abgetasteten Signalwerten (x(t));
- einen Analysator (13, 14) zum Analysieren der abgetasteten Signalwerte zum Generieren einer parametrischen Darstellung des Audiosignals, wobei die parametrische Darstellung Sinusparameter (C_{*S*}) und Rauschparameter (C_{*N*}) umfasst;
- ein Enkryptionsmodul (18) zum Scrambling von mindestens einigen von den Parametern von der parametrischen Darstellung; und
- einen Bitstromgenerator zum Generieren (15) eines codierten Audiostroms (AS), der die verschlüsselte parametrische Darstellung umfasst, die das Audiosignal darstellt und das Synthetisieren des Audiosignals von dem codierten Audiostrom bei einem niedrigeren Qualitätsniveau als demjenigen, das unter Verwendung einer unverschlüsselten parametrischen Darstellung hergestellt würde, ermöglicht.

17. Audiospieler (3), der Folgendes umfasst:
- Mittel zum Lesen eines vom Audiocodierer nach Anspruch 16 erhaltenen codierten Audiostroms (AS'), wobei der Audiostrom ein Audiosignal (x) darstellt und eine parametrische Darstellung des Audiosignals umfasst, wobei die parametrische Darstellung Sinusparameter (C _{*Sc*}*)* und Rauschparameter (C_{*N*}) umfasst;
- auf die Verfügbarkeit eines Schlüssels reagierende Mittel zum Entschlüsseln (38) von mindestens einigen der Parameter der parametrischen Darstellung mit dem Schlüssel; und
- einen Synthetisator (32, 33), der eingerichtet ist, um die entschlüsselte parametrische Darstellung (C_{*S*} , C_{*N*} ) zum Synthetisieren des Audiosignals zu verwenden.

18. Audiosystem, das einen Audiocodierer (1) nach Anspruch 16 und einen Audiospieler (2) nach Anspruch 17 umfasst.

19. Audiostrom (AS), der teilweise verschlüsselte Parameter von einer parametrischen Darstellung eines Audiosignals umfasst, wobei die parametrische Darstellung Sinusparameter (C _{*Sc*}*)* und Rauschparameter (C_{*N*}) umfasst und das Synthetisieren des Audiosignals von dem Audiostrom bei einem niedrigeren Qualitätsniveau als demjenigen, das unter Verwendung einer unverschlüsselten parametrischen Darstellung hergestellt würde, ermöglicht.

20. Speichermedium, auf dem ein Audiostrom (AS) nach Anspruch 19 gespeichert wurde.

## Revendications

1. Un procédé de codage (1) d'un signal audio (x), comprenant les étapes de:
- échantillonner le signal audio (x) pour générer des valeurs de signal échantillonnées (x(t)) ;
- analyser (13, 14) les valeurs de signal échantillonné pour générer une représentation paramétrique du signal audio, la représentation paramétrique comprenant des paramètres sinusoïdaux (C_{S}) et des paramètres de bruit (C_{N}) ;
- chiffrer (18) au moins quelques-uns uns des paramètres de la représentation paramétrique ; et
- générer (15) un train audio encodé (AS) comprenant ladite représentation paramétrique chiffrée, qui est représentative dudit signal audio et permet audit signal audio d'être synthétisé à un niveau de qualité inférieure que celui qui serait produit en employant une représentation paramétrique non chiffrée.

2. Le procédé selon la revendication 1, comprenant en outre les étapes de:
- modelage (13) d'une composante de signal stationnaire du signal audio en
a) déterminant des pistes représentatives des composantes de signal liées présentes dans les segments de signal successifs, et
b) étendant des pistes sur base des paramètres des composantes de signal déjà déterminées,
ladite étape de chiffrement comprenant le brouillage avec une clef de chiffrement des paramètres desdits composantes de signal liées.

3. Le procédé selon la revendication 2, dans lequel les paramètres pour une première composante de signal dans une piste comprend un paramètre représentatif d'une fréquence absolue de ladite composante de signal et dans lequel ladite étape de chiffrement comprend le brouillage des paramètres des segments de signal subséquents avec ladite clef de chiffrement.

4. Un procédé selon la revendication 3, dans lequel lesdits paramètres de segments de signal subséquents comprennent des valeurs différentielles d'amplitude et de fréquence provenant de paramètres de composantes de signal liées déjà déterminés et dans laquelle ladite étape de chiffrement comprend le brouillage des dites différences d'amplitude et/ou de fréquence.

5. Le procédé selon chacune des revendications précédentes, dans lequel ladite étape de génération fournit une représentation paramétrique indépendante de la première fréquence d'échantillonnage, permettant ainsi audit signal audio d'être synthétisé indépendamment de ladite première fréquence d'échantillonnage.

6. Le procédé selon chacune des revendications précédentes, comprenant en outre l'étape de :
- modelage (14) d'une composante de bruit du signal audio en déterminant des paramètres de filtre (pi, qi) d'un filtre qui a une réponse de fréquence, approximative d'un spectre cible de la composante de bruit.

7. Le procédé selon la revendication 6, dans lequel ladite étape de chiffrement comprend le brouillage desdits paramètres de filtre.

8. Le procédé selon les revendications 6 ou 7, comprenant l'étape de conversion des paramètres de filtre en paramètres indépendants de la première fréquence d'échantillonnage.

9. Le procédé selon la revendication 8, dans lequel lesdits paramètres de filtre sont les paramètres autorégressifs (pi) et de moyenne de mouvement (qi), lesdits paramètres indépendants étant indicatifs des fréquences spectrales linéaires.

10. Le procédé selon les revendications 8 ou 9, dans lequel ladite étape de chiffrement comprend le brouillage desdits paramètres indépendants.

11. Le procédé selon les revendications 9 ou 10, dans lequel lesdits paramètres indépendants sont représentés dans une des fréquences absolues ou dans une échelle Bark ou dans une échelle ERB.

12. Le procédé selon chacune des revendications précédentes, comprenant en outre les étapes de :
- l'estimation (110) d'une position d'une composante transitoire de signal dans le signal audio ; et
- l'application (111,112) d'une fonction de forme ayant des paramètres de forme et un paramètre de position pour ledit signal transitoire ;
dans laquelle ladite étape de chiffrement comprend le brouillage de ladite position et/ou des paramètres de forme ; et
dans lequel ladite étape de génération inclut la position de chiffrement et les paramètres de forme dans ledit train audio (AS).

13. Le procédé selon la revendication 12, dans lequel ledit paramètre de position est représentatif d'une localisation en temps absolu de ladite composante de signal transitoire dans ledit signal audio (x).

14. Le procédé selon les revendications 12 ou 13, dans lequel l'étape de correspondance est sensible à ladite composante de signal transitoire, selon un changement échelonné en amplitude, fournissant une fonction de forme indiquant un transitoire échelonné.

15. Un procédé de décodage d'un train audio obtenu par le procédé de codage de la revendication 1, comprenant les étapes de :
- lecture d'un train audio codé (AS'), lequel train audio est représentatif d'un signal audio (x) et inclut une représentation paramétrique du signal audio, la représentation paramétrique comprenant les paramètres sinusoïdaux (C_{Sc}) et les paramètres de bruit (C_{N}) ;
- réponse à la disponibilité d'une clef, déchiffrant (38) au moins quelques-uns des paramètres de ladite représentation paramétrique avec ladite clef ; et
- l'emploi (32,33) de ladite représentation paramétrique déchiffrée (C_{S}, C_{N}) pour synthétiser ledit signal audio.

16. Un codeur audio (1), comprenant :
- un échantillonneur pour échantillonner le signal audio (x) pour générer des valeurs de signal échantillonnées (x(t)) ;
- un analyseur (13,14) pour analyser les valeurs de signal échantillonnées pour générer une représentation paramétrique du signal audio, la représentation paramétrique comprenant des paramètres sinusoïdaux (C_{S}) et des paramètres de bruit (C_{N}) ;
- un module de chiffrement (18) pour brouiller au moins quelques-uns des paramètres de ladite représentation paramétrique ; et
- un générateur de train binaire pour générer (15) un train audio codé (AS) incluant ladite représentation paramétrique chiffrée, représentative dudit signal audio, et permettant audit signal audio d'être synthétisé à partir dudit train audio codé à un niveau de qualité inférieure que celui qui serait produit en employant une représentation paramétrique non chiffrée.

17. Un lecteur audio (3), comprenant :
- un moyen pour lire un train audio codé (AS') provenant du codeur audio de la revendication 16, lequel train audio est représentatif d'un signal audio (x) et inclut une représentation paramétrique du signal audio, la représentation paramétrique comprenant les paramètres sinusoïdaux (C_{Sc}) et les paramètres de bruit (C_{N});
- un moyen sensible à la disponibilité d'une clef, pour déchiffrer (38) au moins quelques-uns des paramètres de ladite représentation paramétrique avec ladite clef ; et
- un synthétiseur (32,33) agencé pour employer ladite représentation déchiffrée (C_{S}, C_{N}) pour synthétiser ledit signal audio.

18. Un système audio comprenant un codeur audio (1) selon la revendication 16 et un lecteur audio (2) selon la revendication 17.

19. Un train audio (AS) comprenant des paramètres partiellement chiffrés d'une représentation paramétrique d'un signal audio, la représentation paramétrique comprenant des paramètres sinusoïdaux (C_{Sc}) et les paramètres de bruit (C_{N}) permettant audit signal audio d'être synthétisé à partir dudit train audio à un niveau de qualité inférieure à celui qui serait produit en employant une représentation paramétrique non chiffrée.

20. Un moyen de stockage sur lequel un train audio (AS) selon la revendication 19 a été stocké.
